(19) Europäisches Patentamt

European Patent Office

Office européen des brevets

(11) **EP 4 610 890 A1**

(12) **EUROPEAN PATENT APPLICATION**
published in accordance with Art. 153(4) EPC

(43) Date of publication:
**03.09.2025 Bulletin 2025/36**

(21) Application number: **23894741.0**

(22) Date of filing: **31.08.2023**

(51) International Patent Classification (IPC):
*G06N 3/098* (2023.01)   *G06N 3/045* (2023.01)
*G06N 5/04* (2023.01)   *G06N 3/02* (2006.01)

(52) Cooperative Patent Classification (CPC):
**G06N 3/02; G06N 3/045; G06N 3/098; G06N 5/04**

(86) International application number:
**PCT/KR2023/013017**

(87) International publication number:
**WO 2024/111809 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022 KR 20220160873
09.03.2023 KR 20230031361**

(71) Applicant: **Samsung Electronics Co., Ltd.
Suwon-si, Gyeonggi-do 16677 (KR)**

(72) Inventors:
• **BAHN, Dongha
Suwon-si, Gyeonggi-do 16677 (KR)**
• **KIM, Kyungrae
Suwon-si, Gyeonggi-do 16677 (KR)**
• **PARK, Chanjong
Suwon-si, Gyeonggi-do 16677 (KR)**
• **JANG, Junik
Suwon-si, Gyeonggi-do 16677 (KR)**
• **JUNG, Jaeil
Suwon-si, Gyeonggi-do 16677 (KR)**

(74) Representative: **Arnold & Siedsma
Bezuidenhoutseweg 57
2594 AC The Hague (NL)**

(54) **METHOD AND DEVICE FOR CONTROLLING INFERENCE TASK EXECUTION THROUGH SPLIT INFERENCE OF ARTIFICIAL NEURAL NETWORK**

(57) Provided are a method and device for controlling inference task execution through split inference of an artificial neural network. The method includes determining one policy from among a plurality of task execution policies based on at least one of requirements of the inference task and a correction index, wherein the correction index indicates a failure rate of each task execution policy, determining, based on the policy, one or more devices to execute split inference of the artificial neural network, updating the correction index corresponding to the policy based on a result of whether the split inference executed by the one or more devices has failed, and updating the policy by using execution records of the split inference obtained from the one or more devices, wherein the execution records include information on a cause of failure of the split inference. Also, the method of controlling execution of an inference task through split inference of an artificial neural network of the electronic device may be performed using an artificial intelligence model.

FIG. 1

## Description

## Technical Field

The present disclosure relates to a method and device for controlling inference task execution through split inference of an artificial neural network. More specifically, the present disclosure relates to a method of updating a policy for determining a device for executing an interference task through split inference.

## Background Art

With the progress in artificial intelligence technology, functions utilizing artificial intelligence models are being utilized in various devices. However, artificial intelligence models require a lot of computation. In cases where it is difficult to perform all operations for artificial intelligence on a single device due to differences in hardware performance and security issues, inference may be executed by distributing the same across multiple devices. Performing the inference task of an artificial intelligence model by distributing the same across multiple devices may be referred to as split inference.

In order to execute split inference using multiple devices, a method is needed to determine which device will be used for split inference. An electronic device may determine a device to use for split inference by using a task execution policy that includes a method of determining the device. The task execution policy may not be appropriate depending on the current state of the device and the type of task. However, it is often practically difficult for users to directly correct inappropriate task execution policies. Therefore, it may be necessary to modify the task execution policy to suit the user's execution environment.

## Disclosure of Invention

## Solution to Problem

According to an embodiment of the present disclosure, a method of controlling inference task execution through split inference of an artificial neural network is provided. The method may include determining one policy from among a plurality of task execution policies based on one of requirements of the inference task and a correction index, wherein the correction index is determined based on a failure rate of each task execution policy. The method may include determining, based on the policy, one or more devices to execute split inference of the artificial neural network. The method may include updating the correction index corresponding to the policy based on a result of whether the split inference executed by the one or more devices has failed. The method may include updating the policy by using execution records of the split inference obtained from the one or more devices, wherein the execution records include information on a cause of failure of the split inference. Each of the plurality of task execution policies may include at least one of a priority of one or more device conditions considered for selecting a device to execute split inference and the number of devices used for split inference.

According to an embodiment of the present disclosure, a computer-readable recording medium having recorded thereon a program for executing the method, on a computer, is provided.

According to an embodiment of the present disclosure, a device for controlling inference task execution through split inference of an artificial neural network is provided. The device may include a memory including one or more instructions, and at least one processor. The at least one processor may be configured to determine, based on requirements of the inference task and a correction index indicating a failure rate of each task execution policy, one policy from among a plurality of task execution policies. The at least one processor may be configured to determine, based on the policy, one or more devices to execute split inference of the artificial neural network. The at least one processor may be configured to update, based on a result of whether the split inference executed by the one or more devices has failed, the correction index corresponding to the policy. The at least one processor may be configured to update the policy by using execution records of the split inference obtained from the one or more devices. The execution records may include information on a cause of failure of the split inference. Each of the plurality of task execution policies may include at least one of a priority of one or more device conditions considered for selecting a device to execute split inference and the number of devices used for split inference.

## Brief Description of Drawings

FIG. 1 is a diagram illustrating a method of controlling execution of split inference by using one or more devices, performed by an electronic device according to an embodiment of the present disclosure.
FIG. 2 is a flowchart of a method of controlling split inference according to an embodiment of the present disclosure.
FIG. 3 is a block diagram illustrating a process by which an electronic device according to an embodiment of the present disclosure controls split inference.
FIG. 4 is a diagram for describing a task execution policy according to an embodiment of the present disclosure.
FIG. 5 is a block diagram illustrating a process by which an electronic device according to an embodiment of the present disclosure determines a task execution policy.
FIG. 6 is a block diagram illustrating a process by which an electronic device according to an embodiment of the present disclosure determines a device.

FIG. 7 is a block diagram illustrating a process by which an electronic device according to an embodiment of the present disclosure determines an inference ratio.

FIG. 8 is a block diagram illustrating a process by which an electronic device according to an embodiment of the present disclosure infers device state information.

FIG. 9 is a diagram for describing a method of controlling split inference according to an inference ratio by an electronic device according to an embodiment of the present disclosure.

FIG. 10 is a diagram illustrating a method, performed by an electronic device according to an embodiment of the present disclosure, of updating a correction index.

FIG. 11 is a diagram illustrating a method, performed by an electronic device according to an embodiment of the present disclosure, of updating a policy.

FIG. 12A is a diagram illustrating a method, performed by an electronic device according to an embodiment of the present disclosure, of training an artificial intelligence model that determines an inference task policy.

FIG. 12B is a diagram illustrating a method, performed by an electronic device according to an embodiment of the present disclosure, of training an artificial intelligence model for determining a device to execute an inference task.

FIG. 13 is a diagram illustrating a method, performed by an electronic device according to an embodiment of the present disclosure, of generating a task execution policy for a new task.

FIG. 14 is a diagram illustrating a method, performed by an electronic device according to an embodiment of the present disclosure, of controlling split inference in an indoor environment.

FIG. 15 is a block diagram showing a configuration of an electronic device according to an embodiment of the present disclosure.

**Mode for the Invention**

In the present disclosure, the expression "at least one of a, b or c" may refer to " a", " b", " c", "a and b", "a and c", "b and c", "all of a, b, and c", or variations thereof.

The terms used in the present disclosure are selected from commonly used terms as much as possible while considering the functions of the present disclosure, but these may vary depending on the intention of engineers working in the field, precedents, the emergence of new technologies, etc. Additionally, in certain cases, there are terms arbitrarily selected by the applicant, and in this case, their meaning may be understood through the corresponding explanation part. Therefore, the terms used in the present disclosure should be defined based on the meaning of the terms and the overall details of the present disclosure, rather than simply the names of the terms.

In the present disclosure, singular expressions may include plural expressions unless the context clearly indicates otherwise. Terms including ordinal numbers, such as "first" or "second," used in the present disclosure may be used to describe various components, but the components should not be limited by the terms. The terms are used solely to distinguish one component from another.

When it is said in the present disclosure that a part "includes" a certain component, this does not exclude other components, but rather may include other components, unless specifically stated otherwise. In the present disclosure, the terms "unit", "module" etc., mean a unit that processes at least one function or operation, which may be implemented by hardware or software, or by a combination of hardware and software.

The expression "configured to" as used in the present disclosure may be used interchangeably with, for example, "suitable for", "having the capacity to", "designed to", "adapted to", "made to", or "capable of", depending on the context. The term "configured to" may not necessarily mean "specifically designed to" in hardware. Alternatively, in some contexts, the expression "a system configured to" may refer to that the system, in conjunction with other devices or components, is "capable of" doing something. For example, the phrase "a processor configured (or set) to perform A, B, and C" may refer to a dedicated processor (e.g., an embedded processor) to perform those operations, or a generic-purpose processor (e.g., a CPU or application processor) that may perform those operations by executing one or more software programs stored in memory.

When a component is referred to as being "connected" or "connected" to another component in the present disclosure, it should be understood that the component may be directly connected or directly connected to the other component, but unless otherwise specifically stated, it should also be understood that the component may be connected or connected via another component in between.

In describing the present disclosure, descriptions of technical details that are well known in the technical field to which the present disclosure belongs and are not directly related to the present disclosure may be omitted. This is to convey the gist of the present disclosure more clearly without obscuring it by omitting unnecessary explanations. In order to clearly describe the present disclosure in the drawings, parts irrelevant to the description are omitted, and similar parts are given similar drawing reference numerals throughout the specification. The size of each component does not entirely reflect its actual size. In each drawing, identical or corresponding components are given the same reference numbers.

The advantages and features of the present disclosure and the methods for achieving them will become apparent by reference to the embodiments described below in detail together with the accompanying drawings. However, the present disclosure is not limited to the embodiments disclosed below and may be implemented in various different forms. The disclosed embodiments are provided so that the present disclosure will be thorough and complete, and will fully convey the scope of the disclosure to those skilled in the art to which the present disclosure pertains. An embodiment of the present disclosure may be defined by the claims.

In the present disclosure, each block of the flowchart drawings and combinations of the flowchart drawings may be performed by computer program instructions. The computer program instructions may be embedded in a processor of a general-purpose computer, special-purpose computer, or other programmable data processing apparatus, and the instructions, when executed by the processor of the computer or other programmable data processing apparatus, may create means for performing the functions described in the flowchart block(s). The computer program instructions may also be stored in a computer usable or computer readable memory that may direct a computer or other programmable data processing device to implement a function in a particular manner, and the instructions stored in the computer usable or computer readable memory may also produce an article of manufacture that includes instruction means for performing the function described in the flowchart block(s). The computer program instructions may also be embedded in a computer or other programmable data processing device.

In the present disclosure, each block of the flowchart diagram may represent a module, segment, or portion of code that includes one or more executable instructions for executing a specified logical function(s). In an embodiment, it is also possible for the functions mentioned in the blocks to occur out of order. For example, two blocks shown in succession may be executed substantially simultaneously or may be executed in reverse order depending on their function.

The term '~unit' used in an embodiment of the present disclosure may represent software or a hardware component such as an FPGA (Field Programmable Gate Array) or an ASIC (Application Specific Integrated Circuit), and the '~unit' may perform a specific role. Meanwhile, '~unit' is not limited to software or hardware. The '~unit' may be configured to reside on an addressable storage medium and may be configured to cause one or more processors to reproduce the same. In an embodiment, the '~unit' may include components such as software components, object-oriented software components, class components, and task components, processes, functions, attributes, procedures, subroutines, segments of program code, drivers, firmware, microcode, circuitry, data, databases, data structures, tables, arrays, and variables. The functionality provided by a particular component or a particular 'part' may be combined to reduce their number or separated into additional components. Additionally, in an embodiment, the '~ unit' may include one or more processors.

Artificial intelligence-related functions according to the present disclosure are operated through a processor and a memory. The processor may consist of one or more processors. The one or more processors may be a general-purpose processor such as a CPU, AP, or DSP (Digital Signal Processor), a graphics-only processor such as a GPU or VPU (Vision Processing Unit), or an artificial intelligence-specific processor such as an NPU. The one or more processors control to process input data according to predefined operation rules or artificial intelligence models stored in a memory. Alternatively, if the one or more processors are artificial intelligence -specific processors, the artificial intelligence-specific processors may be designed with a hardware structure specialized for processing a specific AI model.

The predefined operation rules or artificial intelligence models are characterized in that they are generated through learning. Here, being generated through learning means that a basic artificial intelligence model is learned using a learning algorithm using a large amount of learning data, thereby generating a predefined operation rule or artificial intelligence model set to perform a desired characteristic (or purpose). Such learning may be performed on the device itself on which the artificial intelligence according to the present disclosure is performed, or may be performed through a separate server and/or system. Examples of learning algorithms include, but are not limited to, supervised learning, unsupervised learning, semi-supervised learning, or reinforcement learning.

An artificial intelligence model may be composed of multiple neural network layers. Each of the multiple neural network layers has multiple weight values, and performs neural network operations through operations between the operation results of the previous layer and the multiple weight values. Multiple weights of multiple neural network layers may be optimized by the learning results of the artificial intelligence model. For example, multiple weights may be updated so that the loss value or cost value obtained from the artificial intelligence model is reduced or minimized during the learning process. The artificial neural network may include a deep neural network (DNN), for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or deep Q-networks, but is not limited to the examples described above.

In a method of controlling inference task execution through split inference of an artificial neural network of an electronic device according to the present disclosure, an artificial intelligence model may be used as a method for inferring or predicting a task execution policy or a device to execute split inference. Artificial intelligence models may be generated through learning. Here, being generated through learning means that a basic artificial intelligence model is trained using a learning algorithm using a large amount of learning data, thereby generating predefined operation rules or artificial intelligence models set to perform a desired characteristic (or purpose). An artificial intelligence model may be composed of multiple neural network layers. Each of the multiple neural network layers has multiple weight values, and performs neural network operations through operations between the operation results of the previous layer and the multiple weight values.

Inference prediction is a technology that logically infers and predicts by judging information, and includes knowledge/probability-based reasoning, optimization prediction, preference-based planning, and recommendation.

Below, with reference to the attached drawings, embodiments of the present disclosure are described in detail so that a person skilled in the art may easily implement the present disclosure. However, the present disclosure may be implemented in many different forms and is not limited to the embodiments described herein. And in order to clearly describe the present disclosure in the drawings, parts that are not related to the explanation are omitted, and similar parts are given similar drawing reference numerals throughout the specification. Additionally, the drawing symbols used in each drawing are only intended to describe each drawing, and different drawing symbols used in different drawings are not intended to indicate different elements. The present disclosure will be described in detail with reference to the attached drawings below.

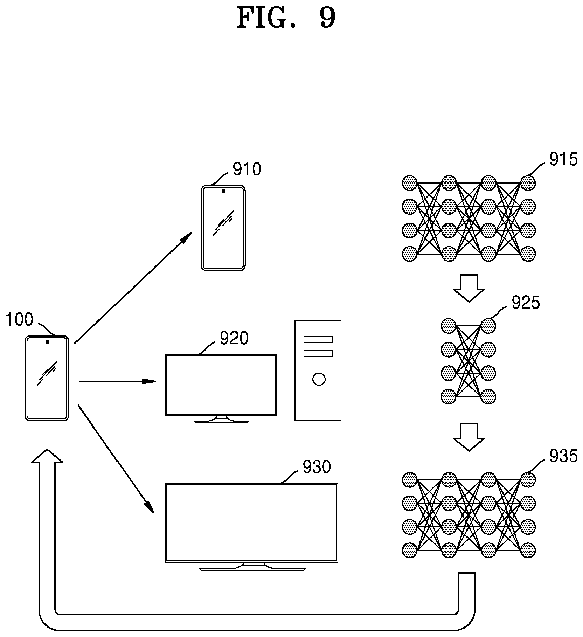

In the present disclosure, split inference may refer to splitting an inference task using an artificial neural network and executing the inference task on a plurality of devices. For example, when executing an inference task called object detection, an artificial neural network's calculations may be split and performed on a plurality of devices. The plurality of devices may process computations on the artificial neural network in at least one of a serial manner or a parallel manner. For example, referring to FIG. 9, split inference may be processed such that a first device 910 performs an operation on a certain layer of an artificial neural network, and a second device 920 performs an operation on a next layer of the artificial neural network based on an operation result of the first device 910. Alternatively, split inference may be processed such that the first device 910 and the second device 920 separately perform operation on the same layer of the artificial neural network.

In the present disclosure, a task execution policy may refer to a rule or guideline for determining a device that performs split inference. A task execution policy may be referred to as an execution policy, a policy, or an inference task policy. According to an embodiment of the present disclosure, a task execution policy may include at least one of a device condition or the number of devices used for split inference. According to an embodiment of the present disclosure, the device condition may include at least one of a processor type, a remaining memory capacity, a heat generation level, a remaining battery capacity, and the number of running applications of a device. According to an embodiment of the present disclosure, a task execution policy may include priorities of device conditions. For example, a task execution policy may include information about the priority of device conditions.

In the present disclosure, an available device may refer to a device capable of executing split inference by being connected to an electronic device that controls execution of split inference. The electronic device may be controlled to determine at least some of a plurality of available devices and execute split inference by using the determined devices. An available device may be used interchangeably with available equipment. According to an embodiment of the present disclosure, an available device may be a device that is connected to an electronic device via a network and exists within a certain distance from the electronic device.

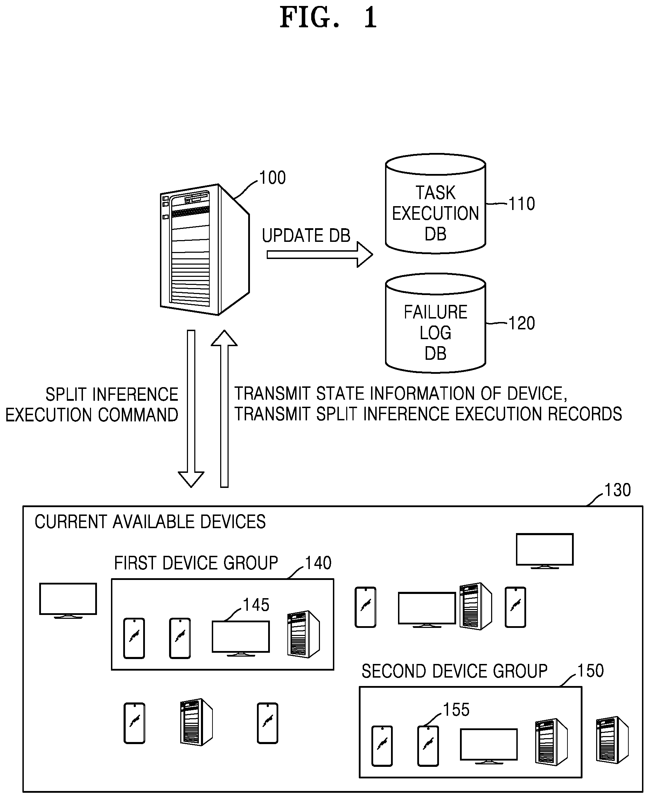

FIG. 1 is a diagram illustrating a method, performed by an electronic device according to an embodiment of the present disclosure, of controlling execution of split inference by using one or more devices.

Referring to FIG. 1, an electronic device 100 may control inference task execution by using at least some of available devices 130.

According to an embodiment of the present disclosure, the electronic device 100 may include, but is not limited to, a server, a mobile phone, a robot vacuum cleaner, a television, an AR (Augmented Reality) device, or a VR (Virtual Reality) device, and may be another device that executes an inference task by using an artificial neural network.

According to an embodiment of the present disclosure, the electronic device 100 may be required to execute a task related to an inference operation using an artificial neural network. For example, the electronic device 100 may need to perform functions such as estimating a user's pose using a camera, generating a spatial map of a space within a home, detecting an object included in an image, or predicting a risk regarding a detected situation. According to an embodiment of the present disclosure, the electronic device 100 may share an inference task with another device or control another device to execute the inference task.

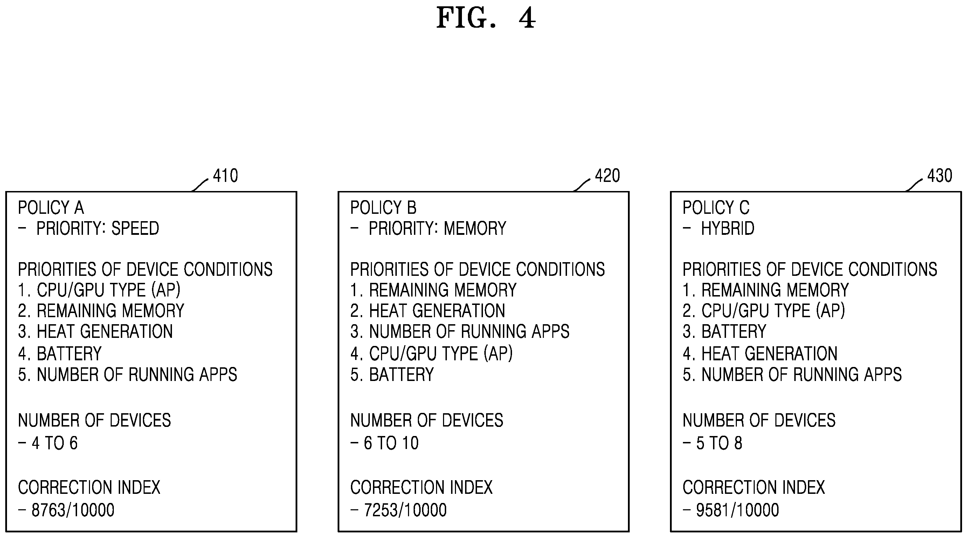

According to an embodiment of the present disclosure, the electronic device 100 may obtain a plurality of task execution policies from a task execution policy DB 110. The task execution policy DB 110 may be stored in a memory of the electronic device 100 or stored in an external server. The task execution policy may include at least one of a priority of one or more device conditions considered for selecting a device to execute split inference and the number of devices used for split inference. The task execution policy according to an embodiment of the present disclosure is described in more detail with reference to FIG. 4.

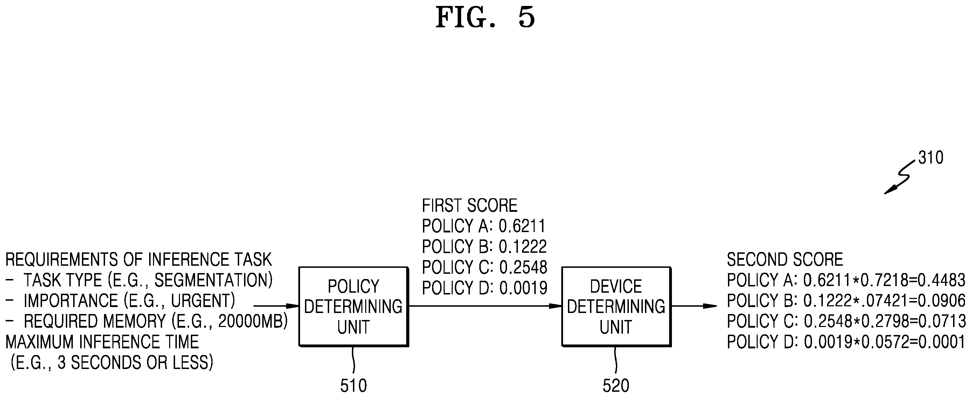

According to an embodiment of the present disclosure, the electronic device 100 may determine priorities of a plurality of task execution policies. The electronic device 100 may identify at least one of requirements of an inference task and a correction index representing a failure rate of each task execution policy. The electronic device 100 may prioritize a plurality of task execution policies based on at least one of requirements of an inference task and a correction index. The electronic device 100 may determine one or more task execution policies based on the priority. A method of determining a task execution policy by the electronic device 100 according to an embodiment of the present disclosure is described in more detail with reference to FIG. 5.

According to an embodiment of the present disclosure, the electronic device 100 may identify an available device 130. For example, the electronic device 100 may determine a device among devices connected to the electronic device 100 via a network that agrees with or does not refuse to execute split inference as the available device 130.

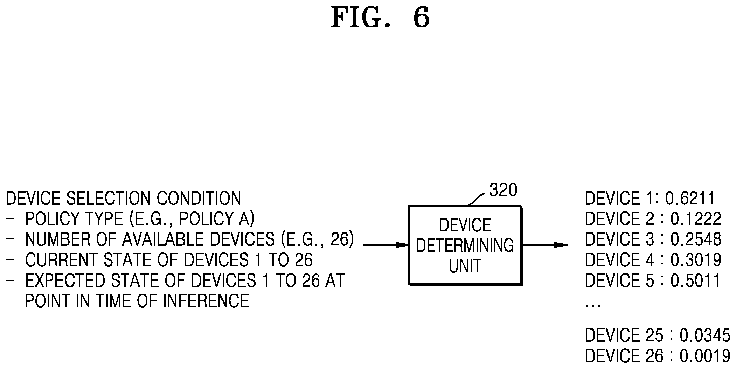

According to an embodiment of the present disclosure, the electronic device 100 may determine one or more devices to execute split inference of an artificial neural network among the available devices 130 based on a determined task execution policy. The electronic device 100 may determine a first device group 140 including one or more devices 145 based on a first priority task execution policy. The electronic device 100 may determine a second device group 150 including one or more devices 155 based on a second-priority task execution policy. The electronic device 100 may determine the first device group 140 and the second device group 150 before executing split inference, but is not limited thereto, and the electronic device 100 may determine the second device group 150 when split inference using the one or more devices 145 included in the first device group 140 fails. For convenience of description, the second device group 150 is illustrated, but is not limited thereto, and a lower priority device group and one or more devices may be determined based on lower priority policies. A process by which the electronic device 100 according to an embodiment of the present disclosure determines a device based on a policy will be described in more detail with reference to FIG. 6.

According to an embodiment of the present disclosure, the electronic device 100 may control to execute split inference using the one or more devices 145 included in the first device group 140. The electronic device 100 may obtain information about a result of whether split inference has failed and execution records of split inference from the one or more devices 145. The electronic device 100 may store information about the execution records of split inference in a failure log DB 120. The information about the execution records of split inference may include information about the cause of failure of split inference.

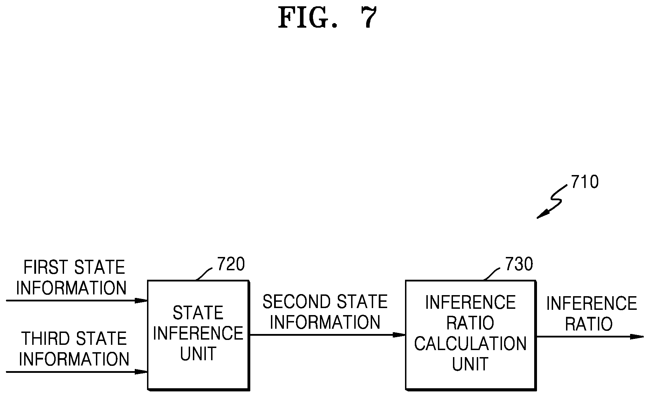

If split inference fails, the electronic device 100 may control split inference to be executed, by using the one or more devices 155 included in the second device group 150. The electronic device 100 may control to execute split inference using one or more devices of a lower priority device group until the split inference is successful. The process of controlling, performed by the electronic device 100 according to an embodiment of the present disclosure, to execute split inference by using one or more devices will be described in more detail with reference to FIGS. 7 to 9.

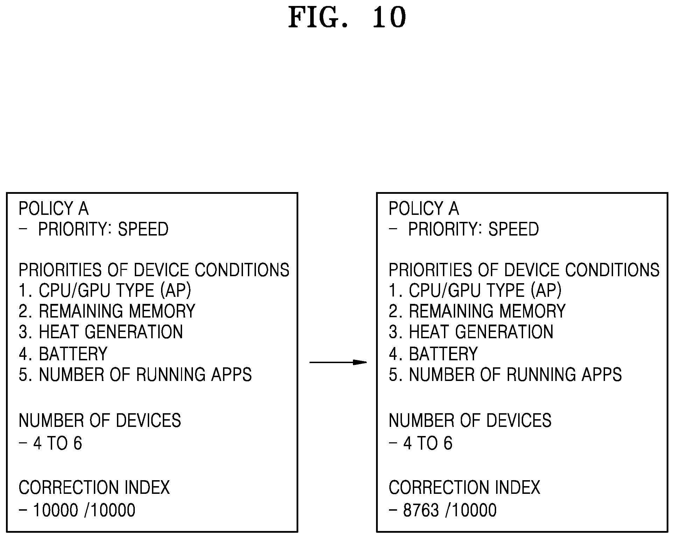

According to an embodiment of the present disclosure, the electronic device 100 may update a correction index corresponding to a task execution policy based on a result of whether the split inference has failed. For example, if split inference fails, the electronic device 100 may reduce a value of the correction index regarding the task execution policy whereby a device for split inference is determined. The correction index may be stored in the task execution policy DB 110 to correspond to the task execution policy or may be stored in the electronic device 100. A method of updating a correction index by an electronic device according to an embodiment of the present disclosure is described in more detail with reference to FIG. 10.

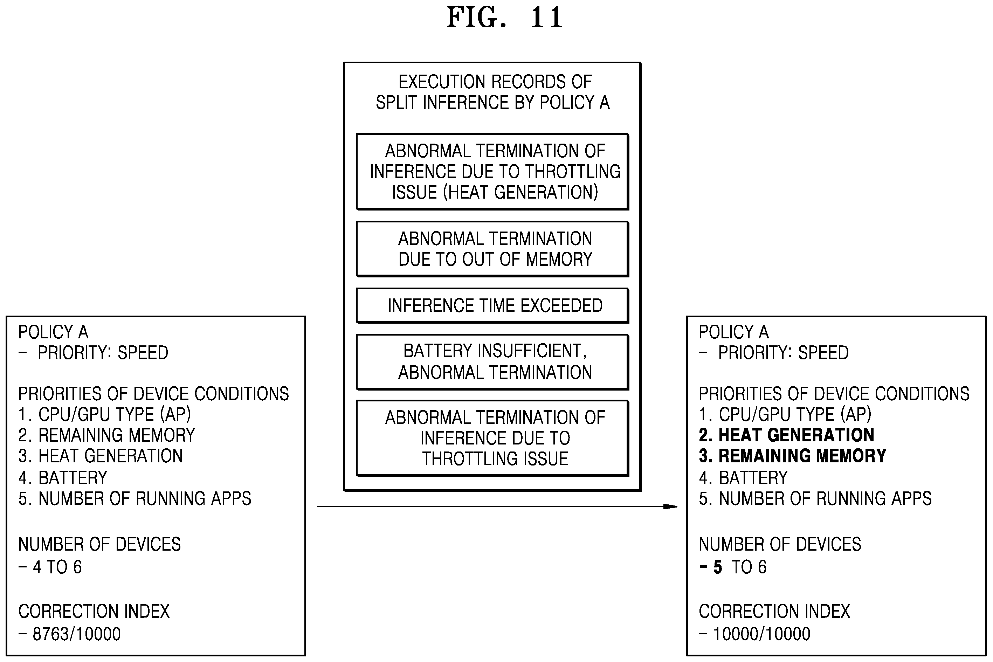

According to an embodiment of the present disclosure, the electronic device 100 may update a task execution policy by using the obtained execution records of the split inference. Information about the execution records of split inference may include information aout the cause of failure of split inference. The electronic device 100 may update a task execution policy based on certain conditions. For example, the electronic device 100 may update the task execution policy during times when split inference is not executed (e.g., during the early morning hours). The electronic device 100 may obtain the execution records of split inference from the failure log DB 120 and update the task execution policy using the obtained execution records. A method, performed by an electronic device according to an embodiment of the present disclosure, of updating a task execution policy is described in more detail with reference to FIG. 11.

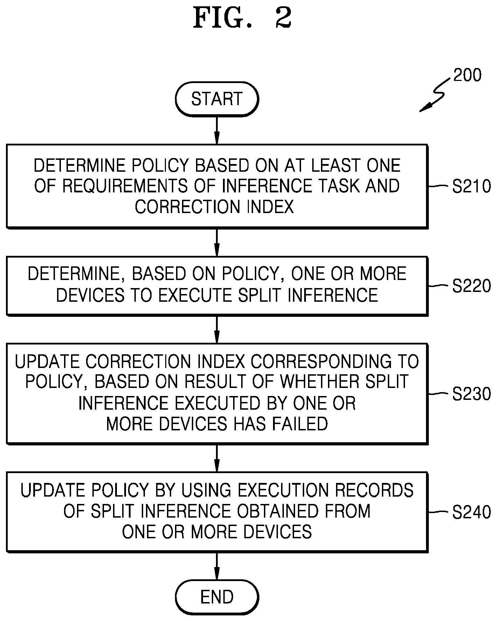

FIG. 2 is a flowchart of a method of controlling split inference according to an embodiment of the present disclosure.

Referring to FIG. 2, a method 200 of controlling split inference may begin with operation S210. The method 200 of controlling split inference according to an embodiment of the present disclosure may be executed by the electronic device 100.

In operation S210, the electronic device 100 may determine one policy from among a plurality of task execution policies based on a correction index determined based on requirements of an inference task and a failure rate of each task execution policy. Each of the plurality of task execution policies may include at least one of a priority of one or more device conditions considered for selecting a device to execute split inference and the number of devices used for split inference. The requirements may include at least one of the type, importance, maximum inference time, and required memory of the inference task. The device conditions may include at least one of the processor type, remaining memory capacity, heat generation level, remaining battery capacity, and the number of running applications of a device.

According to an embodiment of the present disclosure, the electronic device 100 may determine a first score for a plurality of task execution policies based on requirements of an inference task, and determine a second score for the plurality of task execution policies based on the first score and a correction index of the task execution policies. The electronic device 100 may determine an execution policy with a highest second score as the policy. The electronic device 100 may determine an execution policy with a second highest second score as an alternative policy. The electronic device 100 may determine one or more alternative devices for executing split inference based on the alternative policy. The electronic device 100 may control one or more alternative devices to execute split inference based on a failure of split inference.

In operation S220, the electronic device 100 may determine, based on a policy, one or more devices to execute split inference of an artificial neural network.

In operation S230, the electronic device 100 may update the correction index corresponding to the policy based on a result of whether the split inference executed by the one or more devices has failed. The electronic device 100 may reduce the correction index based on a failure of the split inference. The electronic device 100 may maintain or increase the correction index based on a success of the split inference.

In operation S240, the electronic device 100 may update the policy by using the execution records of split inference obtained from the one or more devices. The execution records may contain information about the cause of failure of the split inference. The electronic device 100 may identify the number of split inference failures for one or more device conditions based on the execution records of split inference. The electronic device 100 may update the priority or update the number of devices used for the split inference, such that a device condition with a high number of split inference failures has a higher priority.

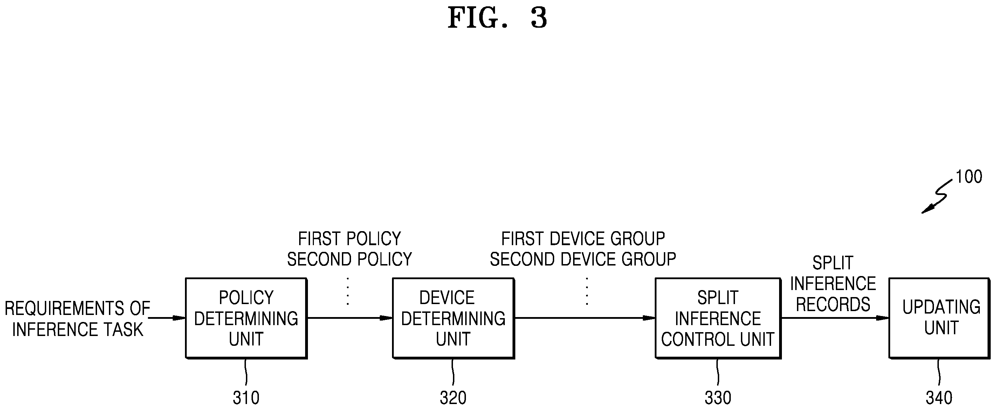

FIG. 3 is a block diagram illustrating a process, performed by an electronic device according to an embodiment of the present disclosure, of controlling split inference.

Referring to FIG. 3, the electronic device 100 may include a policy determining unit 310, a device determining unit 320, a split inference control unit 330, and an update unit 340. The electronic device 100 may identify requirements of an inference task.

According to an embodiment of the present disclosure, the policy determining unit 310 may determine a first policy based on the requirements of an inference task. The policy determining unit 310 may determine a priority of a plurality of task execution policies based on the requirements of an inference task. The policy determining unit 310 may determine a higher priority for a task execution policy that has a lower probability of failure with respect to the requirements of an inference task. As an example, the policy determining unit 310 may determine a highest priority task execution policy as the first policy. Additionally, the policy determining unit 310 may determine lower priority policies (e.g., second policy, third policy, etc.) according to the priority.

According to an embodiment of the present disclosure, the device determining unit 320 may determine one or more devices to execute split inference based on a policy. For example, the device determining unit 320 may determine the first device group 140 including one or more devices based on the first policy. The device determining unit 320 may determine one or more devices that meet the first policy among available devices. Similarly, the device determining unit 320 may determine the second device group 150 including one or more devices based on the second policy.

According to an embodiment of the present disclosure, the split inference control unit 330 may control to execute split inference using one or more devices determined by the device determining unit 320. For example, the split inference control unit 330 may control one or more devices included in the first device group 140 to execute split inference. The split inference control unit 330 may transmit a command to the first device group 140 to execute split inference and receive at least one of result information of the split inference and information regarding the cause of the failure of the inference. The split inference control unit 330 may control one or more devices included in the second device group 150 to execute split inference when the split inference of the first device group 140 fails.

According to an embodiment of the present disclosure, the update unit 340 may update a correction index or a task execution policy based on at least one of result information on whether the received split inference has failed and the execution records of the split inference. The update unit 340 may update the correction index corresponding to the task execution policy based on a failure of the split inference. For example, if the split inference fails, the correction index may be updated such that a probability that the task execution policy will be determined decreases. The update unit 340 may update the task execution policy based on the execution records of the split inference. For example, if there are many causes of inference failure among the execution records of split inference, the priority for heat generation may be increased.

FIG. 4 is a diagram for describing a task execution policy according to an embodiment of the present disclosure.

Referring to FIG. 4, there may be a plurality of different task execution policies of an inference task. A plurality of policies 410, 420, 430 may be stored in the task execution policy DB of FIG. 1. When an initial policy is generated by a user, policy A 410 may be a task execution policy generated by considering speed as important. Similarly, policy B 420 may be a memory-centric task execution policy, and policy C 430 may be a hybrid task execution policy that considers multiple factors in combination.

The policy A 410 according to an embodiment of the present disclosure may include device conditions, priorities of conditions, the number of devices, and a correction index. The device conditions may include the type of CPU or GPU, available memory, heat, battery capacity, and the number of running apps. The priority of the device conditions may indicate the importance of the device conditions. For example, the electronic device 100 may determine a device to execute split inference by determining a large weight for a first-priority device condition and a small weight for a low-priority device condition. For example, if an inference task requires a high-spec processor, the type of CPU or GPU may have a high priority. As an example, if an inference task uses a lot of data, memory capacity may have a relatively high priority. For example, if an inference task requires reliable results rather than speed, heat generation or the number of running apps may take priority. As an example, if the inference task is expected to run for a long time, battery capacity may be a high priority.

The policy A 410 may include the type of CPU or GPU as a first-priority device condition, the remaining memory capacity as a second-priority device condition, heat generation as a third-priority device condition, battery capacity as a fourth-priority device condition, and the number of running apps as a fifth-priority device condition. The number of devices may indicate the condition of the number of devices to be used for split inference. The policy A 410 may execute split inference by using 4 or more and 6 or fewer devices. As the number of devices increases, the computational burden on each device may be reduced. However, when a large number of devices are being used for split inference, available devices that may execute other split inferences are reduced, and thus, it is necessary to execute split inference using an appropriate number of devices. A correction index may indicate a failure rate of a task execution policy. The electronic device 100 may control a task execution policy to be selected less frequently by reducing a correction index when the split inference fails. A correction index of the policy A 410 is 8763/10000, but the correction index is not maintained and may be repeatedly updated depending on execution of the split inference.

The policy B 420 according to an embodiment of the present disclosure may include remaining memory capacity as a first-priority device condition, heat generation as a second-priority device condition, the number of running apps as a third-priority device condition, the type of CPU or GPU as a fourth-priority device condition, and battery capacity as a fifth-priority device condition. The policy B 420 may execute split inference by using 6 or more and 10 or fewer devices. A correction index of the policy B 420 is 7253/10000, but the correction index may not be maintained but be repeatedly updated depending on execution of the split inference.

The policy C 430 according to an embodiment of the present disclosure may include the remaining memory capacity as a first-priority device condition, the type of CPU or GPU as a second-priority device condition, the battery capacity as a third-priority device condition, heat generation as a fourth-priority device condition, and the number of running apps as a fifth-priority device condition. The policy C 430 may execute split inference by using 5 or more and 8 or fewer devices. A correction index of the policy C 430 is 9581/10000, but the correction index may not be maintained but be repeatedly updated depending on execution of the split inference.

FIG. 5 is a block diagram illustrating a process by which an electronic device according to an embodiment of the present disclosure determines a task execution policy.

Referring to FIG. 5, the policy determining unit 310 according to an embodiment of the present disclosure may include a first score determining unit 510 and a second score determining unit 520. The first score determining unit 510 may determine a first score based on requirements of an inference task. As an example, the requirements of an inference task may include, but are not limited to, the type, importance, required memory, and inference time of a task, and some requirements may be omitted or other requirements may be added.

The type of inference task may refer to the type of task for which split inference is to be executed. The type of inference task may include, but are not limited to, segmentation, classification, object detection, sentence completion, and spatial map generation, and may include other inference tasks using artificial neural networks. The importance of a task may indicate the priority of an inference task. For example, an inference task with urgent importance may be executed before an inference task with basic importance. The importance of a task may include, but is not limited to, urgent, important, and basic, and may be expressed as priority 1, priority 2, etc. The required memory may refer to the minimum memory or recommended memory required to execute an inference task. For example, the required memory may be expressed in megabytes (MB) and may require 20000 MB. Maximum inference time may refer to the time limit required for inference to be completed. For example, an inference task might need to be completed within 3 seconds.

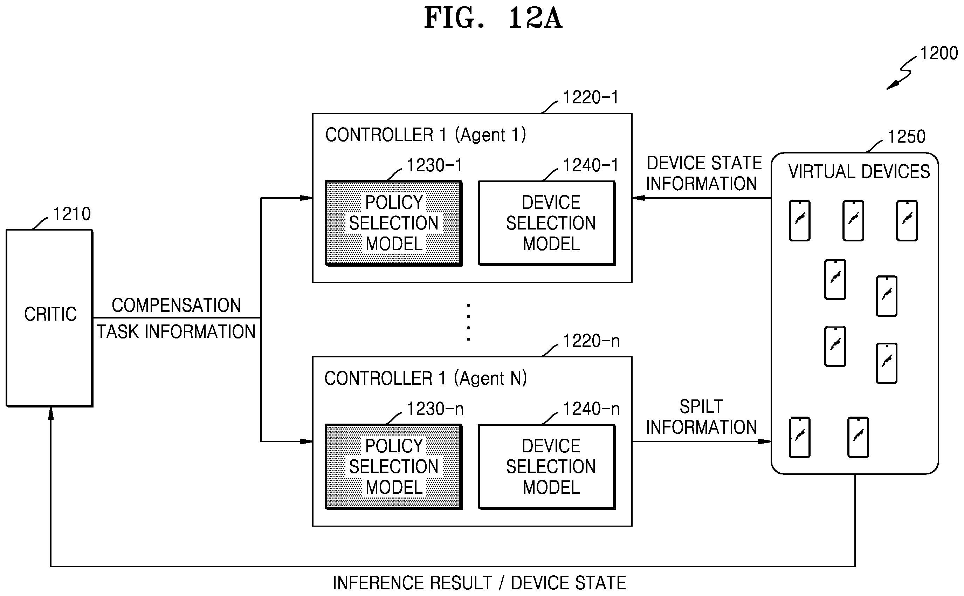

According to an embodiment of the present disclosure, the first score determining unit 510 may include an artificial neural network that takes as input a requirement of an inference task and outputs a first score of a task execution policy. An artificial neural network may be trained to output a large value for a task execution policy that has a high probability of success of the inference task with respect to the requirements of the inference task. For example, the first score determining unit 510 may determine the first score of task execution policy A as 0.6211, the first score of task execution policy B as 0.1222, the first score of task execution policy C as 0.2548, and the first score of task execution policy D as 0.0019, based on the requirements of the inference task. In this example, policy A, which has the highest first score, may indicate a task execution policy to be considered as the first priority by the first score determining unit 510, and policy C, which has the second highest first score, may indicate a task execution policy to be considered as the second priority by the first score determining unit 510. A method of training the first score determining unit 310 according to an embodiment of the present disclosure is described in more detail with reference to FIG. 12A.

According to an embodiment of the present disclosure, the second score determining unit 520 may determine a second score based on the first score and a correction index. For example, the second score may be determined as a product of the first score and the correction index. For example, if correction indices corresponding to policy A, policy B, policy C, and policy D are 0.7218, 0.7421, 0.2798, and 0.0572, respectively, the second score may be determined as products of the first score and the correction indices, 0.4483, 0.0906, 0.0713, and 0.0001. In this example, policy A, which has the highest second score, may indicate a task execution policy that is considered first by the second score determining unit 520, and policy B, which has the second highest second score, may indicate a task execution policy that is considered second by the second score determining unit 520. A task execution policy may have been generated without considering the user environment. Therefore, even if a task execution policy operates with a high probability of success in other environments, it may have a low probability of success in the user environment. Since split inference is continuously required for the electronic device 100, it may be difficult to update the split inference policy in real time. In such a case, the electronic device 100 may reduce the probability of selecting a task execution policy with a high number of failures even before the task execution policy according to the cause of the failure is updated by updating the correction index.

FIG. 6 is a block diagram illustrating a process by which an electronic device according to an embodiment of the present disclosure determines a device.

Referring to FIG. 6, the device determining unit 320 according to an embodiment of the present disclosure may determine one or more devices to be used for split inference based on device selection conditions. The device selection conditions may include the type of policy, the number of available devices, the current state of a device, and the expected state of the device at the point in time of inference. The type of policy may refer to the type of policy determined by the policy determining unit 310. When the policy determining unit 310 determines a plurality of task execution policies, the device determining unit 320 determines a device corresponding to the determined policy. For example, devices corresponding to a first priority policy and a second priority policy determined by the policy determining unit 310 may be determined, respectively. The number of available devices may be identified by the electronic device 100 as described in FIG. 1. The current state of the device may include the device's heat generation, remaining memory capacity, and the number of running apps.

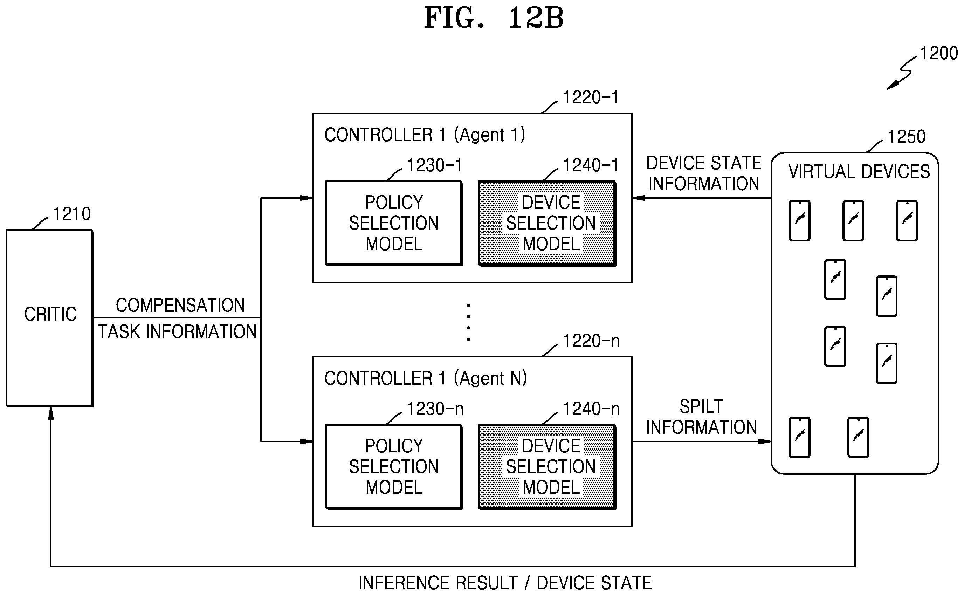

The device determining unit 320 according to an embodiment of the present disclosure may include an artificial neural network that takes a device selection condition as input and outputs a suitability for the device. An artificial neural network may be trained to output a large value for devices with a high probability of success in an inference task for a device selection condition. A method of training the device determining unit 320 according to an embodiment of the present disclosure is described in more detail with reference to FIG. 12B.

The device determining unit 320 according to an embodiment of the present disclosure may include an algorithm designed to determine suitability based on a task execution policy by taking a device selection condition as input. The device determining unit 320 may quantify device selection conditions and determine one or more devices to satisfy the quantified conditions. For example, the device determining unit 320 may quantify the status of the device at the time of inference and determine the suitability for the device by weighting the quantified values differently based on the priority of the policy.

The electronic device 100 according to an embodiment of the present disclosure may determine one or more devices to be used for split inference, based on the number of devices of the policy and an output value of the device determining unit 320. For example, when the number of devices in a policy is 4, the electronic device 100 may determine device 1, device 3, device 4, and device 5 with high output values as devices for split inference.

FIG. 7 is a block diagram illustrating a process by which an electronic device according to an embodiment of the present disclosure determines an inference ratio.

Referring to FIG. 7, the electronic device 100 of FIG. 1 may include an inference ratio determining unit 710. The inference ratio determining unit 710 may include a state inference unit 720 and an inference ratio calculation unit 730. The state inference unit 720 according to an embodiment of the present disclosure may include a state inference model which is a separate artificial neural network model from an artificial neural network for split inference and which is trained to predict state information of a device after the input time when the state information of the device is input.

The state inference unit 720 may receive first state information of each device at a predetermined first point in time from multiple devices connected to a network for split inference of an artificial neural network. Additionally, the state inference model may infer second state information of each device at a second point in time, which is a predetermined time interval after the first point in time, by inputting the first state information of each device.

Additionally, the state inference unit 720 may additionally receive state information of each device before the first point in time, and infer the second state information of each device at the second point in time.

Here, the first state information and the second state information of each device may be state information related to the operable quantity of each device for inference by using an artificial neural network. For example, the first state information and the second state information according to an embodiment may include at least one of a utilization rate of a central processing unit (CPU), a utilization rate of a graphic processing unit (GPU), a temperature of the CPU, a temperature of the GPU, the number of running applications, and an elapsed time of each device.

Here, the elapsed time may refer to the reciprocal of FLOPS (floating-point operations per second), a unit that indicates a computer's computational speed in terms of the number of instructions that may be processed per unit time. Additionally, in this specification, the elapsed time may refer to the expected computation time per block of a deep neural network model. That is, the elapsed time may be a criterion indicating the extent to which a device may process an artificial neural network.

The state inference unit 720 according to an embodiment may infer an elapsed time at a second point in time by inputting first state information of a given device, or may calculate an elapsed time at a second point in time by inferring the usage rate of a CPU (center processing unit), the usage rate of a GPU (graphic processing unit), a temperature of the CPU, a temperature of the GPU, and the number of running applications of the given device as second state information and using the inferred second state information.

According to an embodiment, the state inference unit 720 may additionally receive third state information including at least one of whether a given application is running, whether the screen is on, and whether the camera is running, in addition to the first state information. Since it may be expected that CPU and GPU usage on the device will increase when a given application is running, the screen is turned on, and the camera is running, additional inputs for this may be received to infer the elapsed time at the second point in time.

The inference ratio calculation unit 730 may receive second state information of each device from the state inference unit 720 and calculate the inference distribution ratio of the artificial neural network. The inference ratio calculation unit 730 according to an embodiment may normalize the reciprocal of the elapsed time of each device as in the following mathematical expression 1. Additionally, the reciprocal of the normalized elapsed time may be determined as the inference distribution ratio ($r_i$) of the artificial neural network.

[Mathematical Formula 1]

$$r_i = \frac{1/(t_i)}{\sum_{j=1}^{n} 1/(t_j)}$$

Here, $t_i$ may refer to the elapsed time of the inferred second point in time of the ith device, and n may refer to the total number of a plurality of devices.

For example, if the predicted elapsed time of the first device 910 is 0.5, the predicted elapsed time of the second device 920 is 0.4, the predicted elapsed time of the third device 930 is 0.4, and the predicted elapsed time of the electronic device 100 is 0.1, the inference distribution ratio of the first device 910 may be determined as 0.1176, the inference distribution ratios of the second device 920 and the third device 930 may be determined as 0.1471, and the inference distribution ratio of the electronic device 100 may be determined as 0.5882.

The electronic device 100 according to an embodiment of the present disclosure may transmit the inference distribution ratio of each determined device and the starting point of the inference process of the artificial neural network. In this case, the plurality of devices may store the entire structure of the artificial neural network. For example, if the determined inference distribution ratio of the first device 910 is 0.1176, the electronic device 100 may transmit the determined inference distribution ratio of 0.1176 and the starting point to the first device 910. Additionally, if the determined inference distribution ratio of the second device 920 is 0.1471, the electronic device 100 may transmit the determined inference distribution ratio of 0.1471 and the point at 11.76% of the entire artificial neural network, which is the starting point. By assigning an inference distribution ratio and a starting point to each device in this manner, each device may execute a split inference process of an artificial neural network.

According to an embodiment of the present disclosure, the state inference model included in the state inference unit 720 may be implemented as a recurrent neural network. The state inference model according to an embodiment of the present disclosure may be one that is regression-trained by inputting state information for learning at a predetermined third point in time and state information for ground truth at a fourth point in time that is a predetermined time interval after the predetermined third point in time. In other words, the state inference model may be trained to input learning state information, calculate a loss function by viewing the inferred state information and the state information for ground truth as ground truth, and reduce an output value of the calculated loss function. The learning state information and the state information for ground truth may each include at least one of whether the application is running, whether the screen is on, and whether the camera is running.

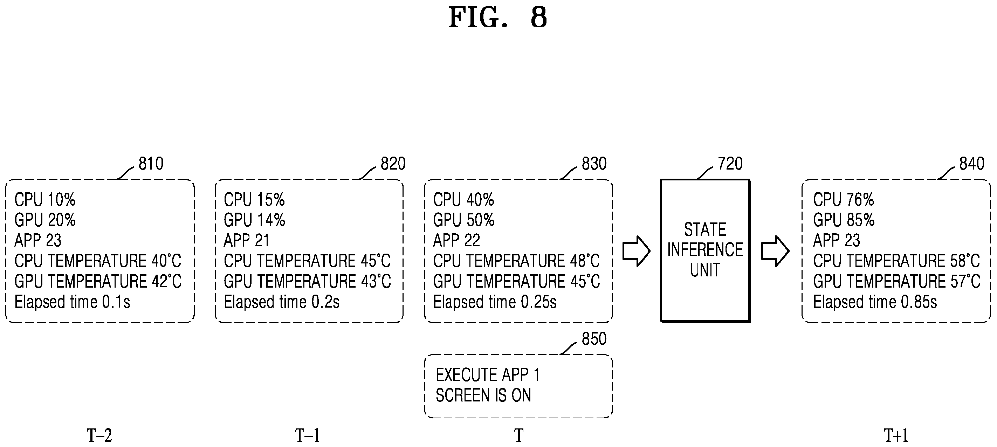

FIG. 8 is a block diagram illustrating a process by which an electronic device according to an embodiment of the present disclosure infers device state information.

Referring to FIG. 8, the state inference unit 720 may receive first state information 810, 820, 830. Additionally, the state inference unit 720 may additionally receive third state information 850. The third state information 850 received at a first time point T may include whether a specific application (App 1) is running and whether the screen is turned on. In this case, the pre-trained state inference model may infer more CPU usage and more GPU usage, and higher CPU temperature and higher GPU temperature from the second state information 840.

Additionally, the state inference unit 720 may receive the third state information 850 and infer a state after a longer elapsed time has passed. The inference ratio calculation unit 730 of FIG. 7, which receives the second state information 840 from the state inference unit 720, may determine the inference distribution ratio of the first device 910 to be lower according to Mathematical Expression 1 above based on the inferred elapsed time.

In FIG. 8, it is described that the third state information of the device includes whether a specific application is running and whether the screen is on, but this is only an example, and the third state information may be state information of a known device in which an environment in which the GPU or CPU may be consumed may be generated. For example, the third state information may further include whether the camera is on.

As the state inference unit 720 may infer the second state information by additionally obtaining the third state information that may significantly change the CPU or GPU usage of the device in addition to the first state information including the CPU or GPU usage, there may be various effects, including the effect of more accurately predicting that the CPU or GPU usage will significantly increase due to the execution of a specific application, which may be reflected in the inference distribution ratio.

According to an embodiment of the present disclosure, in order to save storage space of a plurality of devices included in a split inference system, an artificial neural network may not be stored in the plurality of devices. In this case, the electronic device 100 may store an artificial neural network, and, depending on the inference distribution ratio determined by the electronic device 100, a portion of the artificial neural network required for the inference process of the artificial neural network to be performed by each device may be transmitted.

FIG. 9 is a diagram for describing a method of controlling split inference according to an inference ratio by an electronic device according to an embodiment of the present disclosure.

Referring to FIG. 9, the electronic device 100 may determine the inference distribution ratios of the first device 910, the second device 920, the third device 930, and the electronic device 100, and transmit a portion of the artificial neural network of FIG. 2, allocated according to the inference distribution ratio of each device. In this case, the first device 910, the second device 920, and the third device 930 may not store an artificial neural network for inference, and the electronic device 100 may store the artificial neural network.

When the inference distribution ratio of the first device 910 is determined to be 0.25, the electronic device 100 may transmit a first process 915 corresponding to 25% from the beginning of the entire artificial neural network, to the first device 910. In addition, when the inference distribution ratio of the second device 920 is determined to be 0.1, the electronic device 100 may transmit a second process 925 corresponding to 10% of the entire artificial neural network at a point of 25% of the entire artificial neural network, to the second device 920, and when the inference distribution ratio of the third device 930 is determined to be 0.25, the electronic device 100 may transmit a third process 935 corresponding to 25% of the entire artificial neural network at a point of 35% of the entire artificial neural network, to the third device 930. In this case, the electronic device 100 may execute an inference process corresponding to 40% of the entire artificial neural network starting from a point of 60% of the entire artificial neural network.

Below, an inference process and an inference distribution ratio reset process after the inference process to be performed by each device is transmitted are described. The first device 910 may perform the first process 915 by inputting an input value of an artificial neural network to perform inference and obtain a first intermediate result value. Next, the first device 910 may transmit the obtained first intermediate result value and state information of the first device 910 at a time of performing the first process 915 to the second device 920.

The second device 920 may obtain a second intermediate result value by using the received first intermediate result value as an input to the second process 925. Next, the second device 920 may transmit the obtained second intermediate result value, state information of the second device 920 at a time of performing the second process 925, and the received state information of the first device 910 to the third device 930.

The third device 930 may obtain a third intermediate result value by using the received second intermediate result value as an input to the third process 935. Next, the third device 930 may transmit the obtained third intermediate result value, state information of the third device 930 at a time of performing the third process 935, and the received state information of the first device 910 and the second device 920 to the electronic device 100.

The electronic device 100 may obtain a final inference result by using the received third intermediate result value as an input for the remaining process of the artificial neural network, and may reset the inference distribution ratio by inferring the state information of each device at a later point in time based on the state information of each device received and state information of the electronic device 100 at the point in time when the final inference result was obtained.

The electronic device 100 that determines a pre-selected split inference ratio among a plurality of devices according to an embodiment of the present disclosure may be a device that has a good network connection or a large amount of computational power compared to other devices. In other words, the electronic device 100 may be a device determined based on a network status of each device among a plurality of devices.

Here, the network status may be the amount of network I/O (input/output) packets of each device based on test information received from each device different from the first device 910 by the first device 910 randomly selected from among the plurality of devices.

In addition, the electronic device 100 may be selected from among the plurality of devices, at least one candidate device having a network I/O packet volume less than or equal to a predetermined packet volume, and may be one candidate device connected to a wired network from among the at least one candidate device.

The electronic device 100 according to an embodiment may be a candidate device having the highest GPU processing capacity among at least one candidate device.

As described above, the first device 910 randomly selected from among the plurality of devices may select the electronic device 100 that determines an inference distribution ratio.

FIG. 10 is a diagram illustrating a method, performed by an electronic device according to an embodiment of the present disclosure, of updating a correction index.

Referring to FIG. 10, a task execution policy may include a correction index. The electronic device 100 according to an embodiment of the present disclosure may initialize a correction index when a task execution policy is generated or when a task execution policy is updated. For example, the correction index may be an initialized value of 10000/10000. The electronic device 100 may reduce the correction index if one or more devices determined based on policy A fail the split inference. For example, if the split inference is repeated, the correction index may be reduced from the initial value of 10000/10000 to 8763/10000. The electronic device 100 may reduce the correction index significantly as the number of split inference failures increases. For example, if policy A fails repeatedly or has a high number of failures, the reduction in the correction index may be increased.

According to an embodiment of the present disclosure, the electronic device 100 may select an appropriate policy when determining the policy for a next inference task by reducing the correction index of the failed segmentation policy. Since the electronic device 100 has time constraints in analyzing the cause and updating the policy every time it performs split inference, the possibility of selecting a failed policy next time may be reduced by changing the correction index of the policy.

FIG. 11 is a diagram illustrating a method, performed by an electronic device according to an embodiment of the present disclosure, of updating policy.

Referring to FIG. 11, the electronic device 100 according to an embodiment of the present disclosure may update a task execution policy by using execution records of split inference. The electronic device 100 may obtain execution records from the failure log DB 120 of FIG. 1.

The execution records may include records of inference failures due to heat generation, inference failures due to insufficient memory capacity, inference failures due to low battery, and inference failures due to exceeding the maximum time. According to an embodiment of the present disclosure, the electronic device 100 may classify execution records of split inference. The electronic device 100 may update the policy by adjusting the priorities for numerous failure causes or by training an artificial neural network by generating learning data for the failure causes.

The electronic device 100 according to an embodiment of the present disclosure may change the priority of a policy based on the execution records of split inference. For example, based on the split inference execution records most frequently terminating abnormally due to throttling issues, the electronic device 100 may increase the priority for heat generation. The electronic device 100 may increase the priority of memory capacity when inference fails due to insufficient memory capacity, may increase the priority of remaining battery capacity when inference fails due to insufficient battery capacity, and may increase the priority of CPU or GPU type when inference fails due to exceeding the maximum time.

The electronic device 100 according to an embodiment of the present disclosure may generate learning data for cases where split inference fails, and train an artificial neural network using the generated learning data. The electronic device 100 may train an artificial neural network to determine fewer policies with many causes of failure. Specifically, the device determining unit 320 of FIG. 3 may be trained to output a lower value for a policy in which the task execution policy has failed.

The electronic device 100 according to an embodiment of the present disclosure may increase the number of devices. For example, the electronic device 100 may increase at least one of a lower limit on the number of devices and an upper limit on the number of devices. For example, the number of devices in the electronic device 100 may increase from a lower limit of four to five. The electronic device 100 may determine to increase the number of devices if the cause of the failure occurs on average rather than in a specific condition.

The electronic device 100 according to an embodiment of the present disclosure may perform at least one operation of changing a priority and changing the number of devices, and initializing a correction index. For example, the correction index of updated policy A may be 10000/10000.

FIG. 12A is a diagram illustrating a method, performed by an electronic device according to an embodiment of the present disclosure, of training an artificial intelligence model that determines an inference task policy.

Referring to FIG. 12A, a system 1200 for training an artificial intelligence model for determining an inference task policy according to an embodiment of the present disclosure is described. The system 1200 may be included in the electronic device 100 or may be included in an external server. The system 1200 may include a critic 1210, one or more agents 1220-1, ... , 1220-n, and virtual devices 1250. FIG. 12A illustrates the system 1200 according to an embodiment of the present disclosure, which may be processed not to train a device selection model but train a policy selection model.

An artificial intelligence model that determines an inference task policy according to an embodiment of the present disclosure may be trained using reinforcement learning. For example, an artificial intelligence model may be trained using multi-agent reinforcement learning.

The critic 1210 according to an embodiment of the present disclosure provides a reward according to an inference result. For example, if split inference succeeds, the policy selection model may be given a reward of +5, and if split inference fails, the policy selection model may be given a reward of -30. Additionally, the critic 1210 may give additional rewards based on the ratio of actual inference time to inference request time. For example, if the maximum segmentation time is 2 seconds and the actual inference is 1.2, the critic 1210 may give the agent an additional reward of 0.6 (=1.2/2). Additionally, additional rewards may be given based on the value of the reward granted to each agent.

According to an embodiment of the present disclosure, the one or more agents 1220-1, ..., 1220-n may include policy selection models 1230-1, ..., 1230-n and device selection models 1240-1, ..., 1240-n may be included. The policy selection models 1230-1, ... , 1230-n may be included in the policy determining unit 310 of FIG. 3. The device selection models 1240-1, ... , 1240-n may be included in the device determining unit 320 of FIG. 3. Referring to FIG. 12A, the system 1200 may fix the device selection model so that it is not trained, but train the policy selection model. By using the policy selection models 1230-1, ..., 1230-n and the device selection models 1240-1, ..., 1240-n, the one or more agents 1220-1, ..., 1220-n may determine one or more devices to be used for split inference among the virtual devices 1250, and control to execute split inference using the determined one or more devices. The critic 1210 may obtain results regarding whether split inference has failed from the one or more devices and state information of the one or more devices that performed the inference.

As a device selection model, a heuristic model may be used when learning the initial policy model. According to an embodiment of the present disclosure, the system 1200 may train the policy selection models 1230-1, ..., 1230-n by using various learning data while randomly changing the state of a device when learning is repeated.

FIG. 12B is a diagram illustrating a method, performed by an electronic device according to an embodiment of the present disclosure, of training an artificial intelligence model for determining a device to execute an inference task.

Referring to FIG. 12B, the system 1200 according to an embodiment of the present disclosure may train the device selection models 1240-1, ... ,1240-n.. The critic 1210, the one or more agents 1220-1, ..., 1220-n, and the virtual devices 1250 of FIG. 12B may be understood as corresponding to those of FIG. 12A. The policy selection models 1230-1, ..., 1230-n may have been trained in FIG. 12A.

An artificial intelligence model for determining a device to be used of an inference task according to an embodiment of the present disclosure may be trained by reinforcement learning. For example, an artificial intelligence model may be trained using multi-agent reinforcement learning.

According to an embodiment of the present disclosure, the method by which the critic 1210 grants a reward may be understood to be the same as that of FIG. 12A. Additionally, a method, performed by the one or more agents 1220-1, ..., 1220-n according to an embodiment of the present disclosure, of determining one or more devices to be used for split inference and controlling these to execute split inference may be understood with reference to FIG. 12A.

The system 1200 according to an embodiment of the present disclosure may train the device selection models 1240-1, ..., 1240-n by using various learning data while randomly changing the state of a device when learning is repeated.

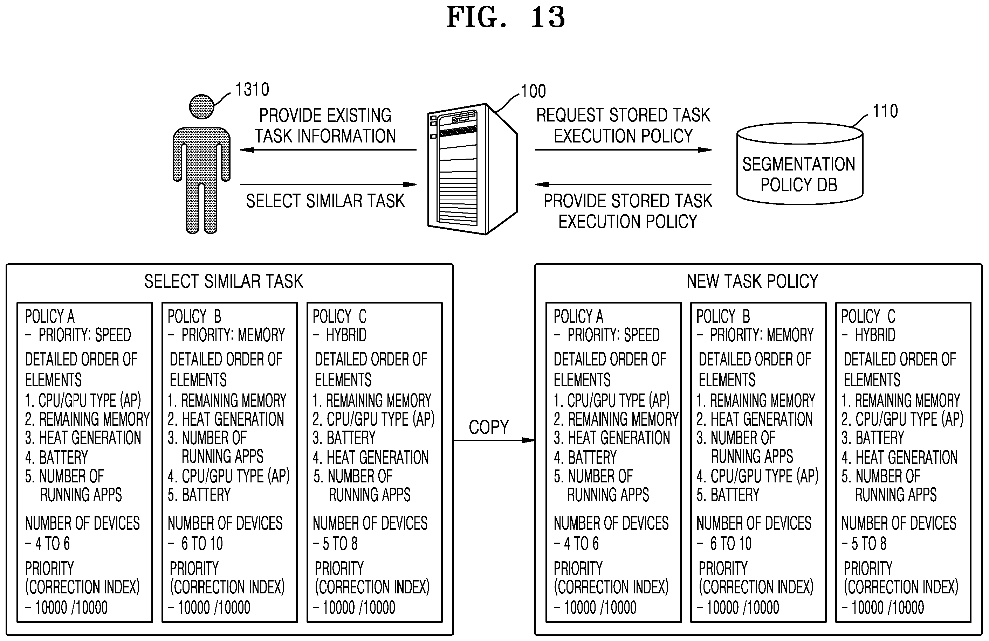

FIG. 13 is a diagram illustrating a method, performed by an electronic device according to an embodiment of the present disclosure, of generating a task execution policy for a new task.

Referring to FIG. 13, the electronic device 100 may generate a task execution policy for a new task. The electronic device 100 may identify the type of existing task. For example, the electronic device 100 may obtain information about the type of an existing task from the segmentation policy DB 110.

The electronic device 100 according to an embodiment of the present disclosure may determine a task most similar to a new task among types of existing tasks. As an example, the electronic device 100 may provide information about an existing task to a user 1310 and obtain a user input to select a similar task. As an example, the electronic device 100 may determine a task with similar characteristics among existing tasks based on the characteristics of the task.

The electronic device 100 according to an embodiment of the present disclosure may generate a new task policy based on a task execution policy of a determined similar task. For example, the electronic device 100 may generate a new task policy that is identical to a task execution policy of a similar task.

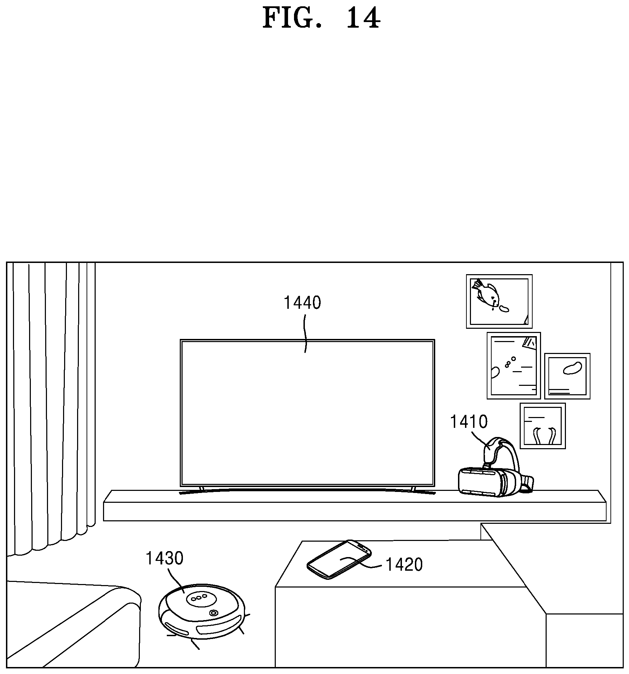

FIG. 14 is a diagram illustrating a method, performed by an electronic device according to an embodiment of the present disclosure, of controlling split inference in an indoor environment.

Referring to FIG. 14, an AR/VR device 1410, a mobile device 1420, a robot vacuum cleaner 1430, and a smart TV 1440 may be in the same space.

The electronic device 100 according to an embodiment of the present disclosure may be at least one of the AR/VR device 1410, the mobile device 1420, the robot vacuum cleaner 1430, and the smart TV 1440. Additionally, an available device capable of executing split inference according to an embodiment of the present disclosure may be at least one of the AR/VR device 1410, the mobile device 1420, the robot vacuum cleaner 1430, and the smart TV 1440. In other words, the AR/VR device 1410, the mobile device 1420, the robot vacuum cleaner 1430, and the smart TV 1440 may all be devices requesting split inference and may be devices executing split inference.

The AR/VR device 1410 according to an embodiment of the present disclosure may generate a virtual image (e.g., placing a virtual apple on an actual table) based on inference using an artificial neural network. The AR/VR device 1410 may perform an inference task using split inference. The robot vacuum cleaner 1430 according to an embodiment of the present disclosure may generate a spatial map of a space in a home using an artificial neural network. The robot vacuum cleaner 1430 may perform an inference task using split inference. The smart TV 1440 according to an embodiment of the present disclosure may evaluate a user's exercise posture by using a camera. The smart TV 1440 may perform an inference task using split inference.

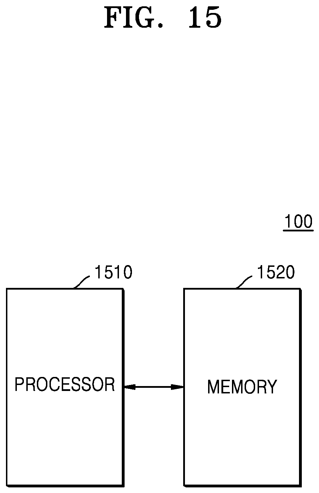

FIG. 15 is a block diagram showing a configuration of an electronic device according to an embodiment of the present disclosure.

Referring to FIG. 15, the electronic device 100 according to an embodiment may include a memory 1520 and a processor 1510. According to an embodiment of the present disclosure, the configuration of the electronic device 100 is not limited to that illustrated in FIG. 15, and may additionally include components not illustrated in FIG. 15 or omit some of the components illustrated in FIG. 15. For example, although not shown in FIG. 15, the electronic device 100 may further include a transceiver capable of transmitting and receiving information by communicating with another device, an input unit capable of receiving an artificial neural network and input data, and an output unit capable of outputting a result.

Additionally, the operation of the processor 1510 to be described later may be implemented as a software module stored in the memory 1520. For example, a software module may be stored in the memory 1520 and operated by being executed by the processor 1510.

The memory 1520 may be electrically connected to the processor 1510 and may store commands or data related to the operations of the components included in the electronic device. According to an embodiment of the present disclosure, the memory 1520 may store instructions for operations for performing inference of a task execution policy obtained using a transceiver, first state information of each device, third state information, an artificial neural network model, and a state inference model.

According to an embodiment of the present disclosure, in an embodiment, the memory 1520 may store instructions for executing software modules when at least some of the modules included in each unit conceptually dividing the functions of the electronic device 100 are implemented as software executed by the processor 1510.

The processor 1510 may be electrically connected to the components included in the electronic device and may perform operations or data processing related to control and/or communication of the components included in the electronic device. According to an embodiment of the present disclosure, the processor 1510 may load and process a command or data received from at least one of the other components into the memory 1520, and store resulting data in the memory 1520.

In addition, in FIG. 15, for convenience of description, the processor 1510 is expressed as operating as a single processor 1510, but at least one function conceptually separating the functions of the learning model and the electronic device described below may be implemented as multiple processors. In this case, the processor 1510 may not operate as the single processor 1510, but may be implemented as multiple processors implemented as separate pieces of hardware to perform each operation. The present disclosure is not limited thereto.

The transceiver may support establishment of a wired or wireless communication channel between the electronic device and another external electronic device and execution of communication through the established communication channel.

In addition, according to various embodiments, the transceiver may include a wireless communication module (e.g., a cellular communication module, a short-range wireless communication module, or a GNSS (global navigation satellite system) communication module) or a wired communication module (e.g., a LAN (local area network) communication module or a power line communication module), and may communicate, by using a corresponding communication module, with an external electronic device through a short-range communication network (e.g., Bluetooth, WiFi direct, or IrDA (infrared data association)) or a long-range communication network (e.g., a cellular network, the Internet, or a computer network (e.g., a LAN or WAN)).

The plurality of devices for split inference of the artificial neural network of FIG. 3 may each include a component that performs the same functions as the memory 1520, the processor 1510, and the transceiver of the electronic device 100 described above. Since the functions of each component are as described above, a detailed description will be omitted.

According to an embodiment of the present disclosure, a method of controlling execution of an inference task through split inference of an artificial neural network is provided. The method may include determining one policy from among a plurality of task execution policies, based on a requirement of the inference task and a correction index indicating a failure rate of each task execution policy. The method may include determining one or more devices to execute split inference of the artificial neural network based on the policy. The method may include updating the correction index corresponding to the policy, based on a result of whether the split inference executed by the one or more devices failed. The method may include updating the policy by using execution records of the split inference obtained from the one or more devices, wherein the execution records include information on a cause of failure of the split inference. Each of the plurality of task execution policies may include at least one of a priority of one or more device conditions considered for selecting a device to execute split inference and the number of devices used for split inference.

According to an embodiment of the present disclosure, the determining of the policy may include determining a first score for the plurality of task execution policies based on the requirements of the inference task. In the determining of the policy, determining a second score for the plurality of task execution policies may be determined based on a correction index determined based on the first score and the failure rate of the task execution policy. The determining of the policy may include determining an execution policy having a highest second score as the policy.

According to an embodiment of the present disclosure, the method may include determining an execution policy having the second highest second score as an alternative policy. The method may include determining one or more alternative devices for executing split inference of the artificial neural network based on the alternative policy. The method may include controlling the one or more alternative devices to execute split inference based on a failure of split inference executed by the one or more devices.

According to an embodiment of the present disclosure, the updating of the correction index may include reducing the correction index, based on a failure of the split inference. The updating of the correction index may include maintaining or increasing the correction index based on a success of the split inference.

According to an embodiment of the present disclosure, the updating of the policy may include identifying the number of split inference failures for each of the one or more device conditions based on the execution records of the split inference. The updating the policy may include updating of the priority or updating the number of devices used for the split inference, such that a device condition with a high number of split inference failures has a higher priority.

According to an embodiment of the present disclosure, the method may further include training at least one of a first artificial intelligence model and a second artificial intelligence model by using at least one of the updated correction index corresponding to the policy and the updated policy. The first artificial intelligence model may be an artificial intelligence model trained to determine one or more policies among a plurality of task execution policies based on requirements of the inference task and the correction index. The second artificial intelligence model may be an artificial intelligence model trained to determine one or more devices for executing split inference of the artificial neural network, based on the one or more of the determined policies.

According to an embodiment of the present disclosure, the method may include identifying a new inference task different from the inference task. The method may include controlling one or more devices to execute split inference, where the one or more devices are determined to execute the new inference task based on the updated plurality of task execution policies.

According to an embodiment of the present disclosure, the method may include displaying a plurality of types of inference tasks corresponding to a plurality of task execution policies stored in a database, based on a task execution policy corresponding to a type of the inference task, being not stored in the database. The method may include obtaining a user input selecting one of the plurality of inference tasks. The method may include generating a task execution policy of the inference task identical to one or more task execution policies corresponding to the inference task of the user input.

According to an embodiment of the present disclosure, the requirements may include at least one of the type, importance, maximum inference time, and required memory of the inference task.

According to an embodiment of the present disclosure, the condition of the one or more devices may include at least one of a processor type, a remaining memory capacity, a heat generation level, a remaining battery capacity, and the number of running applications of the device.

According to an embodiment of the present disclosure, a device for controlling execution of an inference task through split inference of an artificial neural network is provided. The device may include a memory including one or more instructions, and at least one processor. The at least one processor may determine one policy from among a plurality of task execution policies based on requirements of the inference task and a correction index indicating a failure rate of each task execution policy. The at least one processor may determine one or more devices to execute split inference of an artificial neural network based on the policy. The at least one processor may update the correction index corresponding to the policy based on a result of whether the split inference executed by the one or more devices failed. The at least one processor may update the policy using execution records of the split inference obtained from the one or more devices. The execution records may include information on the cause of failure of the split inference. Each of the plurality of task execution policies may include at least one of a priority of one or more device conditions considered for selecting a device to execute split inference and the number of devices used for split inference.

According to an embodiment of the present disclosure, the at least one processor may determine a first score for the plurality of task execution policies based on the requirements of the inference task. The at least one processor may determine a second score for the plurality of task execution policies based on a correction index determined based on the first score and a failure rate of the task execution policies. The at least one processor may determine an execution policy with a highest second score as the policy.

According to an embodiment of the present disclosure, the at least one processor may determine an execution policy having a second highest second score as an alternative policy. The at least one processor may determine one or more alternative devices for executing split inference of the artificial neural network based on the alternative policy. The at least one processor may control the one or more alternative devices to execute split inference based on a failure of split inference executed by the one or more devices.

According to an embodiment of the present disclosure, the at least one processor may reduce the correction index based on a failure of the split inference. The at least one processor may maintain or increase the correction index based on a success of the split inference.

According to an embodiment of the present disclosure, the at least one processor may identify the number of split inference failures for each of the one or more device conditions based on the execution records of the split inference. The at least one processor may update the priority or update the number of devices used for the split inference, such that a device condition with a high number of split inference failures has a higher priority.

According to an embodiment of the present disclosure, the at least one processor may train at least one of a first artificial intelligence model and a second artificial intelligence model by using at least one of the updated correction index corresponding to the policy and the updated policy. The first artificial intelligence model may be an artificial intelligence model trained to determine one or more policies among a plurality of task execution policies based on the requirements of the inference task and the correction index. The second artificial intelligence model may be an artificial intelligence model trained to determine one or more devices for executing split inference of the artificial neural network, based on one or more of the determined policies.

According to an embodiment of the present disclosure, the at least one processor may identify a new inference task different from the inference task. The at least one processor may control one or more devices to execute split inference, where the one or more devices are determined to execute the new inference task based on the updated plurality of task execution policies.

According to an embodiment of the present disclosure, the at least one processor may display a plurality of types of inference tasks corresponding to a plurality of task execution policies stored in a database, based on a task execution policy corresponding to a type of the inference task, being not stored in the database. The at least one processor may obtain a user input selecting one of the plurality of inference tasks. The at least one processor may generate a task execution policy for the inference task identical to one or more task execution policies corresponding to the inference task of the user input.

According to an embodiment of the present disclosure, the requirements may include at least one of the type, importance, maximum inference time, and required memory of the inference task.

According to an embodiment of the present disclosure, a computer-readable recording medium having recorded thereon a program for executing the method on a computer is provided.

An embodiment of the present disclosure may also be implemented in the form of a recording medium including computer-executable instructions, such as a program module executed by a computer. Computer-readable media may be any available media that may be accessed by a computer, and include both volatile and nonvolatile media, removable and non-removable media. The computer-readable media may include computer storage media and communication media. The computer storage media includes both volatile and nonvolatile, removable and non-removable media implemented in any method or technology for storage of information such as computer-readable instructions, data structures, program modules or other data. The communication medium may typically include other data in a modulated data signal, such as computer readable instructions, data structures, or program modules.

A computer-readable storage medium according to an embodiment of the present disclosure may be provided in the form of a non-transitory storage medium. Here, 'non-transitory storage medium' is a tangible device and refers to a device that does not include signals (e.g. electromagnetic waves), and the term does not distinguish between cases where data is stored semi-permanently or temporarily on a storage medium. For example, a 'non-transitory storage medium' may include a buffer in which data is temporarily stored.

A method according to an embodiment of the present disclosure may be provided as included in a computer program product. The computer program product may be traded between sellers and buyers as commodities. The computer program product may be distributed in the form of a machine-readable storage medium (e.g., compact disc read only memory (CD-ROM)), or may be distributed online (e.g., by download or upload) via an application store or directly between two user devices (e.g., smartphones). In the case of online distribution, at least a portion of the computer program product (e.g., a downloadable app) may be temporarily stored or temporarily generated in a device-readable storage medium, such as the memory of a manufacturer's server, an application store's server, or an intermediary server.

The description of the present disclosure is for illustrative purposes only, and a person having ordinary skill in the art to which the present disclosure pertains will understand that the present disclosure may be easily modified into other specific forms without changing the technical idea or essential characteristics of the present disclosure. Therefore, it should be understood that the embodiments described above are examples in all respects and not limiting. For example, each component described as a single entity may be implemented in a distributed manner, and likewise, components described as distributed may be implemented in a combined manner.

The scope of the present disclosure is indicated by the claims described below rather than the detailed description above, and all changes or modifications derived from the meaning and scope of the claims and their equivalent concepts should be interpreted as being included in the scope of the present disclosure.

**Claims**

1. A method of controlling execution of an inference task through split inference of an artificial neural network, the method comprising:

   determining (S210) one policy from among a plurality of task execution policies based on at least one of requirements of the inference task and a correction index, wherein the correction index is determined based on a failure rate of each task execution policy;
   determining (S220), based on the policy, one or more devices to execute split inference of the artificial neural network;
   updating (S230) the correction index corresponding to the policy based on a result of whether the split inference executed by the one or more devices has failed; and
   updating (S240) the policy by using execution records of the split inference obtained from the one or more devices, wherein the execution records include information on a cause of failure of the split inference,
   wherein each of the plurality of task execution policies includes at least one of a priority of one or more device conditions considered for selecting a device to execute split inference and the number of devices used for split inference.

2. The method of claim 1,
   wherein the determining of the policy (S210) comprises:

   determining a first score for the plurality of task execution policies based on the requirements of the inference task;
   determining a second score for the plurality of task execution policies based on a correction index determined based on the first score and a failure rate of the task execution policy;
   determining an execution policy having a highest second score as the policy.

3. The method of claim 2, further comprising:

   determining an execution policy with a second highest score as an alternative policy;
   determining one or more alternative devices for executing split inference of the artificial neural network based on the alternative policy;
   controlling the one or more alternative devices to execute split inference based on a failure of the split inference executed by the one or more devices.

4. The method of any one of claims 1 to 3,
   wherein the updating of the correction index (S230) comprises:

   reducing the correction index based on a failure of the split inference; and

maintaining or increasing the correction index based on a success of the split inference.

5. The method of any one of claims 1 to 4, wherein the updating of the policy (S240) comprises:

identifying a number of split inference failures for each of the one or more device conditions based on the execution records of the split inference; updating the priority or updating the number of devices used for the split inference, such that a device condition with a high number of split inference failures has a higher priority.

6. The method of any one of claims 1 to 5,

further comprising training at least one of a first artificial intelligence model and a second artificial intelligence model by using at least one of the updated correction index corresponding to the policy and the updated policy, wherein the first artificial intelligence model is an artificial intelligence model trained to determine one or more policies among a plurality of task execution policies based on the requirements of the inference task and the correction index, and the second artificial intelligence model is an artificial intelligence model trained to determine one or more devices for executing split inference of the artificial neural network, based on the one or more of the determined policies.

7. The method of any one of claims 1 to 6, comprising:

identifying a new inference task different from the inference task; and controlling one or more devices to execute split inference, wherein the one or more devices are determined to execute the new inference task based on the updated plurality of task execution policies.

8. The method of any one of claims 1 to 7, comprising:

displaying a plurality of types of inference tasks corresponding to a plurality of task execution policies stored in a database, based on a task execution policy corresponding to the type of the inference task, being not stored in the database; obtaining a user input for selecting one of the plurality of inference tasks; and generating a task execution policy of the inference task identical to one or more task execution policies corresponding to the inference task of the user input.

9. The method of any one of claims 1 to 8,

wherein the requirements comprise at least one of the type, importance, maximum inference time, or required memory of the inference task.

10. The method of any one of claims 1 to 9, wherein the conditions of the one or more devices comprise at least one of a processor type, a remaining memory capacity, a heat generation level, a remaining battery capacity, and the number of running applications of the device.

11. A device 100 for controlling execution of an inference task through split inference of an artificial neural network, the device comprising:

a memory 1520 including one or more instructions; and at least one processor 1510, wherein the at least one processor 1510 is configured to determine, based on requirements of the inference task and a correction index indicating a failure rate of each task execution policy, one policy from among a plurality of task execution policies; determine, based on the policy, one or more devices to execute split inference of the artificial neural network; update, based on a result of whether the split inference executed by the one or more devices has failed, the correction index corresponding to the policy; update the policy by using execution records of the split inference obtained from the one or more devices, wherein the execution records include information on a cause of failure of the split inference, wherein each of the plurality of task execution policies includes at least one of a priority of one or more device conditions considered for selecting a device to execute split inference and the number of devices used for split inference.

12. The device of claim 11,

wherein the at least one processor 1510 is further configured to determine a first score for the plurality of task execution policies based on the requirements of the inference task, determine a second score for the plurality of task execution policies based on a correction index determined based on the first score and the failure rate of the task execution policy, and determine an execution policy with a highest second score as the policy.

13. The device of claim 12,

wherein the at least one processor 1510 is further configured to

determine an execution policy with a second highest score as an alternative policy,

determine one or more alternative devices for executing split inference of the artificial neural network based on the alternative policy,

control the one or more alternative devices to execute split inference based on a failure of the split inference executed by the one or more devices.

14. The device of any one of claims 11 to 13,

wherein the at least one processor 1510 is further configured to

reduce, based on a failure of the split inference, the correction index, and maintain or increase the correction index based on a success of the split inference.

15. A computer-readable recording medium having recorded thereon a program for executing the method of any one of claims 1 to 10, on a computer.

# FIG. 1

# FIG. 2

START

DETERMINE POLICY BASED ON AT LEAST ONE
OF REQUIREMENTS OF INFERENCE TASK AND
CORRECTION INDEX — S210

DETERMINE, BASED ON POLICY, ONE OR MORE
DEVICES TO EXECUTE SPLIT INFERENCE — S220

UPDATE CORRECTION INDEX CORRESPONDING TO
POLICY, BASED ON RESULT OF WHETHER SPLIT
INFERENCE EXECUTED BY ONE OR
MORE DEVICES HAS FAILED — S230

UPDATE POLICY BY USING EXECUTION RECORDS
OF SPLIT INFERENCE OBTAINED FROM
ONE OR MORE DEVICES — S240

END

# FIG. 3

# FIG. 4

EP 4 610 890 A1

**410**

POLICY A
- PRIORITY: SPEED

PRIORITIES OF DEVICE CONDITIONS
1. CPU/GPU TYPE (AP)
2. REMAINING MEMORY
3. HEAT GENERATION
4. BATTERY
5. NUMBER OF RUNNING APPS

NUMBER OF DEVICES
- 4 TO 6

CORRECTION INDEX
- 8763/10000

**420**

POLICY B
- PRIORITY: MEMORY

PRIORITIES OF DEVICE CONDITIONS
1. REMAINING MEMORY
2. HEAT GENERATION
3. NUMBER OF RUNNING APPS
4. CPU/GPU TYPE (AP)
5. BATTERY

NUMBER OF DEVICES
- 6 TO 10

CORRECTION INDEX
- 7253/10000

**430**

POLICY C
- HYBRID

PRIORITIES OF DEVICE CONDITIONS
1. REMAINING MEMORY
2. CPU/GPU TYPE (AP)
3. BATTERY
4. HEAT GENERATION
5. NUMBER OF RUNNING APPS

NUMBER OF DEVICES
- 5 TO 8

CORRECTION INDEX
- 9581/10000

# FIG. 5

REQUIREMENTS OF INFERENCE TASK
- TASK TYPE (E.G., SEGMENTATION)
- IMPORTANCE (E.G., URGENT)
- REQUIRED MEMORY (E.G., 20000MB)
MAXIMUM INFERENCE TIME
 (E.G., 3 SECONDS OR LESS)

POLICY
DETERMINING
UNIT

510

FIRST SCORE
POLICY A: 0.6211
POLICY B: 0.1222
POLICY C: 0.2548
POLICY D: 0.0019

DEVICE
DETERMINING
UNIT

520

SECOND SCORE
POLICY A: 0.6211*0.7218=0.4483
POLICY B: 0.1222*.07421=0.0906
POLICY C: 0.2548*0.2798=0.0713
POLICY D: 0.0019*0.0572=0.0001

310

EP 4 610 890 A1

# FIG. 6

DEVICE SELECTION CONDITION
- POLICY TYPE (E.G., POLICY A)
- NUMBER OF AVAILABLE DEVICES (E.G., 26)
- CURRENT STATE OF DEVICES 1 TO 26
- EXPECTED STATE OF DEVICES 1 TO 26 AT
  POINT IN TIME OF INFERENCE

→

320
DEVICE DETERMINING UNIT

→

DEVICE 1: 0.6211
DEVICE 2 : 0.1222
DEVICE 3 : 0.2548
DEVICE 4 : 0.3019
DEVICE 5 : 0.5011

...

DEVICE 25 : 0.0345
DEVICE 26 : 0.0019

EP 4 610 890 A1

# FIG. 7

# FIG. 8

EP 4 610 890 A1

**810**

CPU 10%
GPU 20%
APP 23
CPU TEMPERATURE 40°C
GPU TEMPERATURE 42°C
Elapsed time 0.1s

**820**

CPU 15%
GPU 14%
APP 21
CPU TEMPERATURE 45°C
GPU TEMPERATURE 43°C
Elapsed time 0.2s

**830**

CPU 40%
GPU 50%
APP 22
CPU TEMPERATURE 48°C
GPU TEMPERATURE 45°C
Elapsed time 0.25s

**720**

STATE
INFERENCE
UNIT

**840**

CPU 76%
GPU 85%
APP 23
CPU TEMPERATURE 58°C
GPU TEMPERATURE 57°C
Elapsed time 0.85s

**850**

EXECUTE APP 1
SCREEN IS ON

T-2          T-1          T          T+1

# FIG. 9

# FIG. 10

POLICY A
- PRIORITY: SPEED

PRIORITIES OF DEVICE CONDITIONS
1. CPU/GPU TYPE (AP)
2. REMAINING MEMORY
3. HEAT GENERATION
4. BATTERY
5. NUMBER OF RUNNING APPS

NUMBER OF DEVICES
- 4 TO 6

CORRECTION INDEX
- 10000 /10000

POLICY A
- PRIORITY: SPEED

PRIORITIES OF DEVICE CONDITIONS
1. CPU/GPU TYPE (AP)
2. REMAINING MEMORY
3. HEAT GENERATION
4. BATTERY
5. NUMBER OF RUNNING APPS

NUMBER OF DEVICES
- 4 TO 6

CORRECTION INDEX
- 8763 /10000

# FIG. 11

**EXECUTION RECORDS OF
SPLIT INFERENCE BY POLICY A**

- ABNORMAL TERMINATION OF INFERENCE DUE TO THROTTLING ISSUE (HEAT GENERATION)
- ABNORMAL TERMINATION DUE TO OUT OF MEMORY
- INFERENCE TIME EXCEEDED
- BATTERY INSUFFICIENT, ABNORMAL TERMINATION
- ABNORMAL TERMINATION OF INFERENCE DUE TO THROTTLING ISSUE

**POLICY A**
- PRIORITY: SPEED

PRIORITIES OF DEVICE CONDITIONS
1. CPU/GPU TYPE (AP)
2. REMAINING MEMORY
3. HEAT GENERATION
4. BATTERY
5. NUMBER OF RUNNING APPS

NUMBER OF DEVICES
- 4 TO 6

CORRECTION INDEX
- 8763/10000

**POLICY A**
- PRIORITY: SPEED

PRIORITIES OF DEVICE CONDITIONS
1. CPU/GPU TYPE (AP)
2. **HEAT GENERATION**
3. **REMAINING MEMORY**
4. BATTERY
5. NUMBER OF RUNNING APPS

NUMBER OF DEVICES
- **5** TO 6

CORRECTION INDEX
- 10000/10000

30

# FIG. 12A

CRITIC 1210

COMPENSATION
TASK INFORMATION

CONTROLLER 1 (Agent 1) 1220-1

POLICY SELECTION MODEL 1230-1

DEVICE SELECTION MODEL 1240-1

DEVICE STATE INFORMATION

VIRTUAL DEVICES 1250

1200

CONTROLLER 1 (Agent N) 1220-n

POLICY SELECTION MODEL 1230-n

DEVICE SELECTION MODEL 1240-n

SPILT INFORMATION

INFERENCE RESULT / DEVICE STATE

EP 4 610 890 A1

# FIG. 12B

# FIG. 13

1310

PROVIDE EXISTING
TASK INFORMATION

SELECT SIMILAR TASK

100

REQUEST STORED TASK
EXECUTION POLICY

PROVIDE STORED TASK
EXECUTION POLICY

110

SEGMENTATION
POLICY DB

SELECT SIMILAR TASK

| POLICY A<br>- PRIORITY: SPEED<br><br>DETAILED ORDER OF<br>ELEMENTS<br>1. CPU/GPU TYPE (AP)<br>2. REMAINING MEMORY<br>3. HEAT GENERATION<br>4. BATTERY<br>5. NUMBER OF<br>   RUNNING APPS<br><br>NUMBER OF DEVICES<br>- 4 TO 6<br><br>PRIORITY<br>(CORRECTION INDEX)<br>- 10000 /10000 | POLICY B<br>- PRIORITY: MEMORY<br><br>DETAILED ORDER OF<br>ELEMENTS<br>1. REMAINING MEMORY<br>2. HEAT GENERATION<br>3. NUMBER OF<br>   RUNNING APPS<br>4. CPU/GPU TYPE (AP)<br>5. BATTERY<br><br>NUMBER OF DEVICES<br>- 6 TO 10<br><br>PRIORITY<br>(CORRECTION INDEX)<br>- 10000 /10000 | POLICY C<br>- HYBRID<br><br>DETAILED ORDER OF<br>ELEMENTS<br>1. REMAINING MEMORY<br>2. CPU/GPU TYPE (AP)<br>3. BATTERY<br>4. HEAT GENERATION<br>5. NUMBER OF<br>   RUNNING APPS<br><br>NUMBER OF DEVICES<br>- 5 TO 8<br><br>PRIORITY<br>(CORRECTION INDEX)<br>- 10000 /10000 |
| --- | --- | --- |

COPY

NEW TASK POLICY

| POLICY A<br>- PRIORITY: SPEED<br><br>DETAILED ORDER OF<br>ELEMENTS<br>1. CPU/GPU TYPE (AP)<br>2. REMAINING MEMORY<br>3. HEAT GENERATION<br>4. BATTERY<br>5. NUMBER OF<br>   RUNNING APPS<br><br>NUMBER OF DEVICES<br>- 4 TO 6<br><br>PRIORITY<br>(CORRECTION INDEX)<br>- 10000 /10000 | POLICY B<br>- PRIORITY: MEMORY<br><br>DETAILED ORDER OF<br>ELEMENTS<br>1. REMAINING MEMORY<br>2. HEAT GENERATION<br>3. NUMBER OF<br>   RUNNING APPS<br>4. CPU/GPU TYPE (AP)<br>5. BATTERY<br><br>NUMBER OF DEVICES<br>- 6 TO 10<br><br>PRIORITY<br>(CORRECTION INDEX)<br>- 10000 /10000 | POLICY C<br>- HYBRID<br><br>DETAILED ORDER OF<br>ELEMENTS<br>1. REMAINING MEMORY<br>2. CPU/GPU TYPE (AP)<br>3. BATTERY<br>4. HEAT GENERATION<br>5. NUMBER OF<br>   RUNNING APPS<br><br>NUMBER OF DEVICES<br>- 5 TO 8<br><br>PRIORITY<br>(CORRECTION INDEX)<br>- 10000 /10000 |
| --- | --- | --- |

EP 4 610 890 A1

# FIG. 14

— not used

# FIG. 15

100

1510

1520

PROCESSOR ←→ MEMORY

## INTERNATIONAL SEARCH REPORT

International application No.

**PCT/KR2023/013017**

| A. | CLASSIFICATION OF SUBJECT MATTER |
|---|---|

**G06N 3/098**(2023.01)i; **G06N 3/045**(2023.01)i; **G06N 5/04**(2006.01)i; **G06N 3/02**(2006.01)i

According to International Patent Classification (IPC) or to both national classification and IPC

| B. | FIELDS SEARCHED |
|---|---|

Minimum documentation searched (classification system followed by classification symbols)

G06N 3/098(2023.01); G06F 9/30(2006.01); G06F 9/48(2006.01); G06F 9/50(2006.01); G06K 9/62(2006.01); G06N 20/00(2019.01); G06V 10/774(2022.01); H04L 29/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인공신경망(artificial neural network), 분할 추론(distributed inference), 작업(task), 정책(policy), 우선 순위(priority), 갱신(update), 스코어(score)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2020-0351336 A1 (VERIZON PATENT AND LICENSING INC.) 05 November 2020 (2020-11-05)<br>See paragraphs [0025], [0062]-[0069] and [0071]. | 1,4-7,9-11,14-15 |
| A | | 2-3,8,12-13 |
| Y | CN 114169427 B (BEIJING BAIDU NETCOM SCIENCE AND TECHNOLOGY CO., LTD.) 04 October 2022 (2022-10-04)<br>See paragraphs [0154]-[0157]; and claim 1. | 1,4-7,9-11,14-15 |
| A | KR 10-2022-0110587 A (GOOGLE LLC) 08 August 2022 (2022-08-08)<br>See paragraphs [0025], [0039]-[0040] and [0058]. | 1-15 |
| A | KR 10-1697647 B1 (ELECTRONICS AND TELECOMMUNICATIONS RESEARCH INSTITUTE) 01 February 2017 (2017-02-01)<br>See paragraphs [0029] and [0034]; and claims 1-2. | 1-15 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 November 2023** | **30 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/013017**

### C.    DOCUMENTS CONSIDERED TO BE RELEVANT

| Category* | Citation of document, with indication, where appropriate, of the relevant passages | Relevant to claim No. |
|---|---|---|
| A | KR 10-2020-0093093 A (SAMSUNG ELECTRONICS CO., LTD.) 05 August 2020 (2020-08-05)<br>See claims 1-6. | 1-15 |

Form PCT/ISA/210 (second sheet) (July 2022)

**INTERNATIONAL SEARCH REPORT**
Information on patent family members

International application No.

**PCT/KR2023/013017**

| Patent document cited in search report | | | Publication date (day/month/year) | Patent family member(s) | | | Publication date (day/month/year) |
|---|---|---|---|---|---|---|---|
| US | 2020-0351336 | A1 | 05 November 2020 | US | 11265369 | B2 | 01 March 2022 |
| CN | 114169427 | B | 04 October 2022 | CN | 114169427 | A | 11 March 2022 |
| | | | | EP | 4191411 | A1 | 07 June 2023 |
| | | | | JP | 2023-025146 | A | 21 February 2023 |
| | | | | KR | 10-2022-0161234 | A | 06 December 2022 |
| | | | | US | 2023-0169351 | A1 | 01 June 2023 |
| KR | 10-2022-0110587 | A | 08 August 2022 | CN | 114830086 | A | 29 July 2022 |
| | | | | EP | 4055479 | A1 | 14 September 2022 |
| | | | | JP | 2023-508005 | A | 28 February 2023 |
| | | | | US | 2021-0191779 | A1 | 24 June 2021 |
| | | | | WO | 2021-127671 | A1 | 24 June 2021 |
| KR | 10-1697647 | B1 | 01 February 2017 | US | 2015-0100964 | A1 | 09 April 2015 |
| KR | 10-2020-0093093 | A | 05 August 2020 | US | 2020-0219015 | A1 | 09 July 2020 |

Form PCT/ISA/210 (patent family annex) (July 2022)